# EUROPÄISCHE PATENTANMELDUNG

(11) **EP 1 176 161 A1**
(43) Veröffentlichungstag der Anmeldung: **30.01.2002**
(21) Anmeldenummer: 00402121.8
(22) Anmeldetag: 24.07.2000
(51) Int. Cl.: C08J 3/24, C08L 23/04, C08L 23/08, H01B 3/44

(54) **Verfahren zur Herstellung von mit vernetztem Polyethylen überzogenen Leitungsdrähten**

(71) Anmelder: Nexans, 75008 Paris (FR)
(72) Erfinder: Dänekas, Franz, 30826 Garbsen (DE); Strittmatter, Marc, 30459 Hannover (DE)
(74) Vertreter: Döring, Roger, Dipl.-Ing.

(57) **Zusammenfassung**

Bei einem Verfahren zur Herstellung von mit vernetztem Polyethylen überzogenen Leitungsdrähten wird ein Granulat aus Polyethylen mit einem flüssigen silanhaltigen Vernetzungsmittel versetzt, das so vorbereitete Granulat in einem Extruder aufgeschmolzen und auf den elektrischen Leitungsdraht extrudiert und die extrudierte Schicht in Gegenwart von Wasser oder Wasserdampf vernetzt. Dabei wird ein Gemisch aus körnigem Material aus einem Polyethylen Homopolymer und einem Polyethylen Copolymer mit dem Vernetzungsmittel überzogen, wobei der Copolymeranteil in dem Überzug auf dem Kabel zwischen 1 und 8 Gew. % liegt.

## Beschreibung

Die Erfindung betrifft ein Verfahren zur Herstellung von mit vernetztem Polyethylen überzogenen Leitungsdrähten.

Ein solches Verfahren ist aus der CH 618 450 A1 bekannt. Bei dieser sogenannten SilanVernetzung werden einem durch Peroxide erzeugten Polymerradikal reaktionsfähige niedermolekulare Verbindungen aufgepfropft, die zu polyfunktionellen Verbindungsstellen an dem Makromolekül führen.

Diese Seitenarme - z. B. Organosilane - sind in der Lage, mit anderen Vernetzungsstellen zu reagieren, so daß theoretisch mehrere Makromoleküle an einem solchen Vernetzungsknoten miteinander verbunden werden. Das Aufpfropfen erfolgt bei mechanischer Beanspruchung der Komponenten, wie intensivem Mischen und Kneten bei erhöhter Temperatur in einem Mischer oder einem Extruder.

Die eigentliche Vernetzung erfolgt in einem zweiten Arbeitsgang in Gegenwart eines Katalysators unter Einwirkung von Wasser. Der Katalysator ist erforderlich, um brauchbare Vernetzungsgeschwindigkeiten zu erreichen. Die mit dem isolierenden Überzug versehenen Leitungsdrähte werden zu diesem Zweck in einer Atmosphäre hoher Luftfeuchte bzw. einem Wasserbad gelagert. Da das Wasser nur durch Diffusion in das Polymer gelangen kann, ist für die Vernetzungszeit sowohl die Temperatur als auch die Wanddicke des zu vernetzenden Produktes von Einfluß.

In der Kabeltechnik - insbesondere zur Herstellung von Mittelspannungskabel - sind das sog. Monosil-Verfahren und das Sioplas-Verfahren bekannt geworden. Beim Monosil-Verfahren handelt es sich um ein Ein-Stufen-Verfahren, d. h. die einzelnen Komponenten werden in einen Extruder eingegeben. Das Mischen, Homogenisieren, Pfropfen und Extrudieren erfolgt also in einem Arbeitsgang.

Beim Sioplas-Verfahren werden die Komponenten bis auf den Katalysator in einen Extruder eingegeben, dort vermischt, homogenisiert, gepfropft und anschließend granuliert. Das Granulat wird dann üblicherweise gemeinsam mit einem getrennt verpackten Katalysatorbatch an das Kabelwerk geliefert. Dort werden die beiden Komponenten - gepfropftes Granulat und Katalysaterbatch - in einen Extruder eingegeben, dort geschmolzen, auf den Leitungsdraht aufextrudiert und dann in Gegenwart von Wasser oder Wasserdampf vernetzt.

Mittel- oder Hochspannungskabel mit einer Isolierschicht aus Polyethylen weisen unter Umständen Defekte in Form von Hohlräumen, Verunreinigungen sowie Oberflächenfehler auf, die zu einer sogenannten elektrischen Bäumchenbildung führen können. In Gegenwart von Feuchtigkeit und elektrischer Belastung können sogenannte Wasserbäumchen auftreten, die zu einer Zerstörung der Isolierschicht führen.

Man hat versucht, diese Nachteile dadurch zu vermeiden, daß man eine sogenannte Dreifachextrusion anwendete, d. h. innere Leitschicht, Isolierschicht und äußere Leitschicht wurden durch Koextrusion mittels eines Dreifachspritzkopfes gleichzeitig erzeugt. Dadurch können Verunreinigungen und Hohlräume in der Isolierschicht bzw. zwischen den Schichten minimiert werden.

Es ist auch versucht worden, den Isolierwerkstoff zu optimieren. So ist beschrieben, dem Polyethylen bei seiner Herstellung sog. Wasserbäumchen-Inhibitoren zuzusetzen, die sich von Polymeren ableiten, wie z. B. Organopolysiloxane, Polyethylenglycole, Epoxidharze, Polypropylen, Polystyrol und Polyvinylalkohol. Die gewünschten Effekte und die Beeinflussung des Wasserbäumchenwachstums sind sehr unterschiedlich. In vielen Fällen wirken sich die Zusätze nachteilig auf die Homogenität und die Alterungsbeständigkeit des Polyethylens sowie auf die elektrischen Eigenschaften des Polyethylens aus.

Für die Silanvernetzung sind die o. a. Optimierungen noch nicht versucht worden, so daß keine Voraussagen darüber gemacht werden können, welche Einflüsse die Zusätze auf den Vernetzungsmechanismus der Silanvernetzung haben können.

Der vorliegenden Erfindung liegt die Aufgabe zugrunde, ein Verfahren zur Herstellung von Mittel- oder Hochspannungskabel mittels Silanvernetzung anzugeben, welches kostengünstig Kabel bereitzustellen vermag, die eine höhere Beständigkeit gegen die Bildung von Wasserbäumchen und somit eine höhere Lebensdauer aufweisen.

Diese Aufgabe wird durch die im Kennzeichen des Anspruchs 1 erfaßten Merkmale gelöst. Weitere vorteilhafte Ausgestaltungen sind in den Unteransprüchen erfaßt.

Der wesentliche Vorteil der Erfindung ist darin zu sehen, daß durch die Verwendung eines Gemisches aus Polyethylen Homopolymer und Polyethylen Copolymer mit einem begrenzten Copolymeranteil die Beständigkeit der Kabelisolierung gegen die Bildung von Wasserbäumchen wesentlich erhöht werden kann. Es kann ein Polyethylen Homopolymer auf Basis LDPE und / oder LLDPE eingesetzt werden, welches kostengünstig von zahlreichen Polymerherstellern überwiegend für die Verarbeitung zu Polyethylenfolien sozusagen als Massenware angeboten wird. Es kann somit auf teure "Spezialitäten" der Polymerhersteller verzichtet werden.

Die Erfindung ist anhand einiger Ausführungsbeispiele näher erläutert.

### Beispiel 1 (Zweischrittverfahren)

Es werden 80 Teile LDPE mit einer Dichte von 0,92 g/ccm als Granulat und 20 Teile Polyethylen Copolymer mit einem Copolymeranteil von 20 %, ebenfalls als Granulat, sowie 1,8 Teile eines flüssigen Organosilans (VTMOS), 0,2 Teile eines Stabilisators sowie 0,10 Teile Peroxid in einen Extruder eingegeben und dort innig vermischt. Dabei diffundiert das flüssige Gemisch in die Oberfläche der Granulate ein. Im weiteren Fortgang im Extruder wird sowohl durch die mechanische Vermischung der Granulate als auch durch Wärmezufuhr von außen das Granulatgemisch geschmolzen. Innerhalb des Extruders findet zunächst eine Pfropfung des Silans auf das LDPE Polyethylen bzw. auf das Polyethylen Copolymer sowie eine Homogenisierung der Schmelze statt. Am Ende des Extruders befindet sich eine Lochscheibe und dahinter ein rotierendes Messer, welches die Schmelzestränge zu einem Granulat zerkleinert.

Das auf diese Weise hergestellte Granulat kann gelagert werden und wird bei Bedarf einem Extruder zugeführt, mit dessen Hilfe auf den Leitungsdraht eine Isolierschicht aufgebracht wird. Dem gepfropften Granulat wird im oder vor dem Extruder noch ein Katalysatorbatch zugegeben. Die Isolierschicht wird dann in einem Wasserbad bzw. einer Sauna bei erhöhter Temperatur vernetzt.

### Beispiel 2 (Einschrittverfahren)

Es werden 85 Teile LLDPE mit einer Dichte von 0,92 g/ccm, 15 Teile Polyethylen Copolymer mit einem Anteil von 28 % Copolymer, jeweils in Granulatform zusammen mit 1,5 Teilen eines flüssigen Organosilans (VTMOS), 0,2 Teilen Stabilisator, 0,08 Teilen Peroxid sowie 0,06 Teilen Katalysator in einen Isolierextruder eingegeben und dort zunächst innig vermischt, wobei die flüssigen Komponenten Silan, Stabilisator, Peroxid und Katalysator in das Granulat eindiffundieren. Mit zunehmender Erwärmung wird dieser Diffusionsprozeß beschleunigt. Im weiteren Fortgang findet innerhalb des Isolierextruders die Pfropfung des Silans auf das LLDPE und das Polyethylen Copolymer sowie die Homogenisierung statt. Die homogenisierte Schmelze wird auf den Leitungsdraht extrudiert und in einem Wasserbad abgekühlt. Im Wasserbad findet schon eine Teilvernetzung der äußeren Randschichten der Isolierung statt.

Der auf eine Kabeltrommel aufgewickelte isolierte Leitungsdraht wird dann in eine Feuchtekammer (Sauna ) oder Wasserbad eingebracht und dort über eine längere Zeit bei erhöhter Temperatur 75 - 90 °C gelagert, wobei die Isolierschicht vollständig vernetzt wird.

Sowohl für Beispiel 1 als auch für Beispiel 2 kann das Polyethlen Copolymer zusammen mit dem Silan, dem Stabilisator und dem Peroxid als sogenanntes Masterbatch in den Extruder eingebracht werden.

Es kann auch von Vorteil sein, den Katalysator zusammen mit dem Polyethylen Copolymer oder einem Teil des Copolymers als sogenannten Katalysatorbatch zuzugeben, wobei der Katalysatorbatch dem gepfropften Homopolymer Granulat im oder vor dem Isolierextruder zugegeben wird.

Wesentlich ist, daß das Polyethylen Copolymer bezüglich seines Copolymeranteils und/oder seiner Teile in einer solchen Menge eingebracht wird, daß der Copolymeranteil in der Isolierschicht zwischen 1 und 8 Gew.% liegt.

### Ergebnisse

Versuche haben ergeben, daß die nach der Lehre der Erfindung hergestellten Kabel eine erheblich höhere Beständigkeit gegen Wasserbäumchen aufwiesen als Kabel mit einer reinen Polyethylen Homopolymer Isolierschicht.

Die elektrische Durchschlagfestigkeit der erfindungsgemäß hergestellten Kabel lag nach einem Wet Ageing Test um ca 30 % höher, so daß unter Feuchtigkeitseinwirkung bei der üblichen Erdverlegung eine längere Lebensdauer erwartet werden kann.

## Patentansprüche

1. Verfahren zur Herstellung von mit vernetztem Polyethylen überzogenen Leitungsdrähten, bei dem ein Granulat aus Polyethylen mit einem flüssigen silanhaltigen Vernetzungsmittel versetzt wird, das so vorbereitete Granulat in einem Extruder aufgeschmolzen und auf den elektrischen Leitungsdraht extrudiert und die extrudierte Schicht in Gegenwart von Wasser oder Wasserdampf vernetzt wird, **dadurch gekennzeichnet, daß** ein Gemisch aus körnigem Material aus einem Polyethylen Homopolymer und einem Polyethylen Copolymer mit dem Vernetzungsmittel überzogen wird, wobei der Copolymeranteil in dem Überzug auf dem Kabel zwischen 1 und 8 Gew. % liegt.

2. Verfahren nach Anspruch 1, **dadurch gekennzeichnet, daß** das körnige Gemisch mit einem flüssigen Gemisch aus Silan, Peroxid und ggfs Stabilisator vor einem Compoundierprozeß überzogen wird.

3. Verfahren nach Anspruch 1, **dadurch gekennzeichnet, daß** das körnige Gemisch mit einem flüssigen Gemisch aus Silan, Peroxid und ggfs Stabilisator während des Compoundierprozesses überzogen wird.

4. Verfahren nach einem der Ansprüche 1 bis 3, **dadurch gekennzeichnet, daß** das mit dem Vernetzungsmittel überzogene körnige Material gepfropft, homogenisiert und anschließend regranuliert wird.

5. Verfahren nach Anspruch 4, **dadurch gekennzeichnet, daß** das Regranulat mit einem Katalysator oder einem Katalysatorbatch versehen in einen Isolierextruder eingegeben, auf dem Leiterdraht aufextrudiert, und die auf den Leiterdraht aufextrudierte Schicht in Gegenwart von Wasser oder Wasserdampf vernetzt wird.

6. Verfahren nach Anspruch 4 oder 5, **dadurch gekennzeichnet, daß** das körnige Material aus Polyethylen Homopolymer allein mit dem flüssigen Vernetzungsmittel in einer Compoundieranlage z.B. einem Extruder überzogen, geschmolzen, gepfropft, homogenisiert und danach regranuliert wird und das Regranulat und ein körniges Material aus Polyethylen Copolymer mit einem Copolymeranteil von mehr als 30 %, welches mit einem Katalysator versetzt ist, in einen Isolierextruder eingegeben werden, das Gemisch dort geschmolzen, homogenisiert und auf den Leitungsdraht aufextrudiert wird.

7. Verfahren nach einem der Ansprüche 1 bis 6, **dadurch gekennzeichnet, daß** als Polyethylen Copolymer ein Ethylen-Butyl-Acrylat **(**EBA), ein Ethylen-Ethyl-Acrylat (EEA**)** oder ein Ethylen-Methyl-Acrylat (EMA) jeweils mit einem Copolymeranteil von 10 - 35 % eingesetzt wird.

8. Verfahren nach einem der Ansprüche 1 bis 7, **dadurch gekennzeichnet, daß** ein körniges Material aus Polyethylen Homopolymer und Polyethylen-Copolymer in einen Isolierextruder eingegeben wird, daß ein flüssiges Gemisch aus Silan, Peroxid und ggf Stabilisator sowie ein Katalysator oder ein mit Katalysator hochkonzentrierter Batch ebenfalls in den Isolierextruder eingegeben wird und daß das Gemisch in dem Isolierextruder geschmolzen, gepfropft und homogenisiert wird, daß das gepfropfte, homogenisierte Material auf den Leiterdraht extrudiert und in Gegenwart von Wasser oder Wasserdampf vernetzt wird.
